# EUROPEAN PATENT APPLICATION

(11) **EP 1 689 012 A1**
(43) Date of publication of application: **09.08.2006**
(21) Application number: 04799564.2
(22) Date of filing: 10.11.2004
(51) Int. Cl.: H01M 4/86, H01M 8/12, H01M 8/02

(54) **GENERATION CELL FOR SOLID ELECTROLYTE FUEL CELL**

(30) Priority: 10.11.2003 JP 2003379477; 10.11.2003 JP 2003379791; 08.06.2004 JP 2004169532; 19.10.2004 JP 2004303860; 05.11.2004 JP 2004322303
(71) Applicant: MITSUBISHI MATERIALS CORPORATION, Chiyoda-ku, Tokyo 100-8117 (JP)
(72) Inventor: YAMADA, Masaharu, Mitsubishi Materials Corporation, Naka-gun, Ibaraki 311-0102 (JP); HOSHINO, Koji, Mitsubhishi Materials Corporation, Naka-gun, Ibaraki 311-0102 (JP); ADACHI, Kazunori, Mitsubishi Materials Corporation, Naka-gun, Ibaraki 311-0102 (JP); KOMADA, Norikazu, Mitsubishi Materials Corporation, Naka-gun, Ibaraki 311-0102 (JP)
(74) Representative: HOFFMANN EITLE
(86) International application number: PCT/JP2004/016658
(87) International publication number: WO 2005/045962

(57) **Abstract**

Provided is a power generation cell for a solid electrolyte fuel cell, in which a lanthanum gallate-based electrolyte is used as a solid electrolyte. Use of alternative energy for replacing petroleum can be promoted and it is possible to use waste heat using the solid electrolyte fuel cell, thus the solid electrolyte fuel cell is watched in views of resource nursing and the environment. The power generation cell is typically operated at 800 to 1000ºC. However, currently, the power generation cell, which is operated at 600 to 800ºC by using the lanthanum gallate-based electrolyte, is suggested. Since a current power generation cell has a large size and has an insufficient output, there are demands for size reduction and high output. In the power generation cell, Sm-doped ceria particles are separately attached to a surface of porous nickel having a network frame structure. The demands are satisfied by using the anode.

## Description

### Technical Field

The present invention relates to a power generation cell for a solid electrolyte fuel cell, in which a lanthanum gallate-based electrolyte is used as a solid electrolyte and, more particularly, to an anode of a power generation cell for a solid electrolyte fuel cell.

### Background Art

Generally, in a solid electrolyte fuel cell, hydrogen gas, natural gas, methanol, coal gas or the like is used as fuel, thus use of alternative energy for replacing petroleum may be promoted in power generation. Furthermore, since it is possible to use waste heat, the solid electrolyte fuel cell is watched in views of resource nursing and the environment. The solid electrolyte fuel cell typically includes a power generation cell having a structure in which a cathode is layered on a side of a solid electrolyte including oxides and an anode is layered on another side of the solid electrolyte. The solid electrolyte fuel cell also includes a cathode collector layered on an external side of the cathode of the power generation cell, an anode collector layered on an external side of the anode of the power generation cell, and separators layered on the external sides of the cathode and the anode. The solid electrolyte fuel cell is typically operated at 800 to 1000ºC. However, recently, a low temperature-type solid electrolyte fuel cell, which is operated at 600 to 800ºC, has been suggested.

It is known that a lanthanum gallate-based oxide ion conductor is used as a solid electrolyte constituting a power generation cell of the low temperature-type solid electrolyte fuel cell, and that the lanthanum gallate-based oxide ion conductor is an oxide ion conductor expressed by the formula of La_{1-X}Sr_{X}Ga_{1-Y-Z}Mg_{Y}A_{Z}O₃ (A is one or more of Co, Fe, Ni, and Cu, X is 0.05 to 0.3, Y is 0 to 0.29, Z is 0.01 to 0.3, and Y+Z is 0.025 to 0.3)(see Patent Document 1).
Additionally, it is known that the anode includes a porous sintered body, which contains B- (B is one or more of Sm, Gd, Y, and Ca, and the same shall apply hereinafter) doped ceria expressed by the formula of Ce₁₋ₘBₘO₂ (B is one or more of Sm, Gd, Y, and Ca, and 0<m≤0.4) and nickel. Further, it is known that nickel of the porous sintered body including B-doped ceria and nickel forms a porous frame structure constituting a network, and that B-doped ceria has the particle size of 0.1 to 2 µm and a network structure surrounding a surface of nickel of the porous frame structure as shown in Fig. 3 (see Patent Document 2).
Furthermore, it is known that the anode includes the sintered body, which has B-doped ceria expressed by the formula of Ce₁₋ₘBₘO₂ (B is one or more of Sm, Gd, Y, and Ca, and 0<m≤0.4) and nickel. The sintered body may have a nickel composition gradient, thus a nickel content is increased in a thickness direction. Alternatively, the sintered body may include a plurality of layers having different nickel contents so that the nickel content is continuously or intermittently increased in the direction from the innermost layer to the outermost layer.
[Patent Document 1] Japanese Unexamined Patent Application Publication No. 11-335164
[Patent Document 2] Japanese Unexamined Patent Application Publication No. 11-297333

### Disclosure of the Invention

### Problems to be Solved by the Invention

Since a current solid electrolyte fuel cell has a large size and has an insufficient output, there are demands for size reduction and high output. There are also demands for size reduction and high output of a solid electrolyte fuel cell, which has a conventional power generation cell including a sintered body containing B-doped ceria and nickel as an anode.

### Means for Solving the Problems

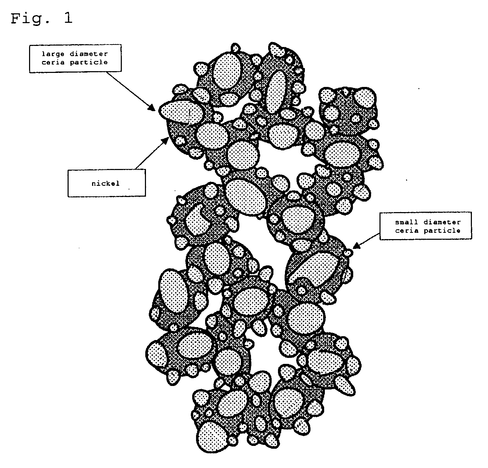

Therefore, in the above-mentioned point of view, the inventors of the invention have conducted research to develop a better solid electrolyte fuel cell. Thereby, the following results were obtained.
(a) In an anode having a structure where B-doped ceria is attached to a surface of nickel of a porous frame structure in a particle form, when the amount of B-doped ceria particles, which are separately attached while the B-doped ceria particle is not in contact with the adjacent B-doped ceria particle, is large, characteristics of the solid electrolyte fuel cell are improved. (b) As shown in Fig. 1, when the B-doped ceria particles, which are separately attached to the surface of nickel of the porous frame structure, include B-doped ceria particles, which are known in the art and have an average particle size of 0.2 to 0.6 µm (hereinafter, referred to as "large diameter ceria particle"), and B-doped ceria particles, which have an average particle size of 0.01 to 0.09 µm (hereinafter, referred to as "small diameter ceria particle") and are separately attached between the large diameter ceria particles, it is possible to improve characteristics of the solid electrolyte fuel cell.
(c) In the power generation cell for the solid electrolyte fuel cell in which a lanthanum gallate-based oxide ion conductor is used as a solid electrolyte, a porous cathode is formed on a side of the solid electrolyte, and a porous anode is formed on another side of the solid electrolyte, the anode includes a sintered body which contains B-doped ceria expressed by the formula of Ce₁₋ₘBₘO₂ (B is one or more of Sm, Gd, Y, and Ca, and 0<m≤0.4) and nickel. In the sintered body, the B-doped ceria particles, which are expressed by the formula of Ce₁₋ₘBₘO₂ (B is one or more of Sm, Gd, Y, and Ca, and 0<m≤0.4), are separately attached to the surface of nickel of the porous frame structure. Furthermore, the sintered body has a nickel composition gradient, thus a nickel content is increased in a thickness direction. The nickel content of the innermost surface of the anode which is in contact with the solid electrolyte is 0.1 to 20 vol%, and the nickel content of the outermost surface of the anode is 40 to 99 vol%. Thereby, it is possible to increase a power output.
(d) In the power generation cell for the solid electrolyte fuel cell in which the lanthanum gallate-based oxide ion conductor is used as the solid electrolyte, the porous cathode is formed on a side of the solid electrolyte, and the porous anode is formed on another side of the solid electrolyte, the anode includes the sintered body which contains B-doped ceria expressed by the formula of Ce₁₋ₘBₘO₂ (B is one or more of Sm, Gd, Y, and Ca, and 0<m≤0.4) and nickel. The sintered body includes a plurality of layers having different nickel contents, in which B-doped ceria particles are separately attached to the surface of nickel of the porous frame structure. A plurality of layers includes at least the innermost layer, which has the nickel content of 0.1 to 20 vol% and is in contact with the solid electrolyte, and the outermost layer, which has the nickel content of 40 to 99 vol% and is separated from the solid electrolyte at least by the innermost layer. Thereby, it is possible to increase a power output.
(e) An intermediate layer including a single layer or two or more layers is formed between the innermost and the outermost layers having the different nickel contents disclosed in (d). The nickel content of the innermost layer is 0.1 to 20 vol%, and the nickel content of the outermost layer is 40 to 99 vol%. The intermediate layer including the single layer or two or more layers is formed between the innermost and the outermost layers so that the nickel content is continuously or intermittently increased in the direction from the innermost layer to the outermost layer. Thereby, it is possible to increase a power output.

The invention is achieved based on these research results, and is characterized by:
(1) In an anode of a power generation cell for a solid oxide fuel cell, B-doped ceria particles are separately attached to a frame surface of porous nickel having a network frame structure.
(2) In an anode of a power generation cell for a solid oxide fuel cell, large diameter ceria particles are separately attached to a frame surface of porous nickel having a network frame structure, and small diameter ceria particles are separately attached between the large diameter ceria particles.
(3) In an anode of a power generation cell for a solid oxide fuel cell, the B-doped ceria particles disclosed in (1) or the B-doped ceria particles including the large diameter ceria particles and the small diameter ceria particles disclosed in (2) are expressed by a formula of Ce₁₋ₘBₘO₂ (B is one or more of Sm, Gd, Y, and Ca, and 0<m≤0.4).
(4) A power generation cell for a solid oxide fuel cell includes an electrolyte which is formed of a lanthanum gallate-based oxide ion conductor, a porous cathode which is formed on a side of the electrolyte, and a porous anode which is formed on another side of the electrolyte, the anode being the anode disclosed in (1), (2), or (3).
(5) In the power generation cell for the solid oxide fuel cell disclosed in (4), the lanthanum gallate-based oxide ion conductor is expressed by a formula of La_{1-X}Sr_{X}Ga_{1-Y-Z}Mg_{Y}A_{Z}O₃ (A is one or more of Co, Fe, Ni, and Cu, X is 0.05 to 0.3, Y is 0 to 0.29, Z is 0.01 to 0.3, and Y+Z is 0.025 to 0.3).
(6) A solid oxide fuel cell includes the power generation cell for the solid oxide fuel cell disclosed in (4) or (5).
(7) A power generation cell for a solid electrolyte fuel cell includes a solid electrolyte which is formed of a lanthanum gallate-based oxide ion conductor, a porous cathode which is formed on a side of the solid electrolyte, and a porous anode which is formed on another side of the solid electrolyte. The anode includes a sintered body of B-doped ceria expressed by a formula of Ce₁₋ₘBₘO₂ (B is one or more of Sm, Gd, Y, and Ca, and 0<m≤0.4) and nickel, B-doped ceria particles are separately attached to a frame surface of nickel having a porous frame structure in the sintered body, the sintered body has a nickel composition gradient so that a nickel content is increased in a thickness direction, the nickel content of an innermost surface of the sintered body which is in contact with the solid electrolyte is 0.1 to 20 vol%, and the nickel content of an outermost surface of the sintered body which is farthest from the solid electrolyte is 40 to 99 vol%.
(8) A power generation cell for a solid electrolyte fuel cell includes a solid electrolyte which is formed of a lanthanum gallate-based oxide ion conductor, a porous cathode which is formed on a side of the solid electrolyte, and a porous anode which is formed on another side of the solid electrolyte. The anode includes a sintered body of B-doped ceria expressed by a formula of Ce₁₋ₘBₘO₂ (B is one or more of Sm, Gd, Y, and Ca, and 0<m≤0.4) and nickel, the sintered body includes a plurality of layers which has different nickel contents and in which B-doped ceria particles are separately attached to a frame surface of nickel having a porous frame structure, and the layers having the different nickel contents include an innermost layer, which is in contact with the solid electrolyte and has the nickel content of 0.1 to 20 vol%, and an outermost layer, which is separated from the solid electrolyte at least by the innermost layer and has the nickel content of 40 to 99 vol%.
(9) A power generation cell for a solid electrolyte fuel cell includes a solid electrolyte which is formed of a lanthanum gallate-based oxide ion conductor, a porous cathode which is formed on a side of the solid electrolyte, and a porous anode which is formed on another side of the solid electrolyte. The anode includes a sintered body of B-doped ceria expressed by a formula of Ce₁₋ₘBₘO₂ (B is one or more of Sm, Gd, Y, and Ca, and 0<m≤0.4) and nickel, the sintered body includes a plurality of layers which has different nickel contents and in which B-doped ceria particles are separately attached to a frame surface of nickel having a porous frame structure, the layers having the different nickel contents include an innermost layer, which is in contact with the solid electrolyte and has the nickel content of 0.1 to 20 vol%, an outermost layer, which is layered so as to be farthest from the solid electrolyte and has the nickel content of 40 to 99 vol%, and an intermediate layer, which is formed between the innermost and the outermost layers and has a single layer or two or more layers, and the intermediate layer including the single layer or two or more layers is layered so that the nickel content is continuously or intermittently increased in the direction from the innermost layer to the outermost layer which is farthest from the solid electrolyte.

It is more preferable that the B-doped ceria particles separately attached to the surface of the porous nickel frame have two particle size distribution peaks in which particle sizes are significantly different.
(f) In the power generation cell for the solid electrolyte fuel cell in which the lanthanum gallate-based oxide ion conductor is used as the solid electrolyte, the porous cathode is formed on a side of the solid electrolyte, and the porous anode is formed on another side of the solid electrolyte, the anode includes a sintered body which contains B-doped ceria expressed by the formula of Ce₁₋ₘBₘO₂ (B is one or more of Sm, Gd, Y, and Ca, and 0<m≤0.4) and nickel. In the sintered body, as shown in Fig. 1, B-doped ceria particles, which are expressed by the formula of Ce₁₋ₘBₘO₂ (B is one or more of Sm, Gd, Y, and Ca, and 0<m≤0.4) and have an average particle size of 0.2 to 0.6 µm (hereinafter, the B-doped ceria particle having the average particle size of 0.2 to 0.6 µm will be referred to as "large diameter ceria particle"), are separately attached to the surface of nickel of the porous frame structure, and B-doped ceria particles, which are expressed by the formula of Ce₁₋ₘBₘO₂ (B is one or more of Sm, Gd, Y, and Ca, and 0<m≤0.4) and have an average particle size of 0.01 to 0.09 µm (hereinafter, the B-doped ceria particle having the average particle size of 0.01 to 0.09 µm will be referred to as "small diameter ceria particle"), are separately attached between the large diameter ceria particles. Furthermore, the sintered body has the nickel composition gradient, thus the nickel content is increased in a thickness direction. The nickel content of the innermost surface of the anode which is in contact with the solid electrolyte is 0.1 to 20 vol%, and the nickel content of the outermost surface of the anode is 40 to 99 vol%. Thereby, it is possible to increase a power output.
(g) In the power generation cell for the solid electrolyte fuel cell in which the lanthanum gallate-based oxide ion conductor is used as the solid electrolyte, the porous cathode is formed on a side of the solid electrolyte, and the porous anode is formed on another side of the solid electrolyte, the anode includes the sintered body which contains B-doped ceria expressed by the formula of Ce₁₋ₘBₘO₂ (B is one or more of Sm, Gd, Y, and Ca, and 0<m≤0.4) and nickel. As shown in Fig. 1, the sintered body includes a plurality of layers having different nickel contents, in which the large diameter ceria particles are separately attached to the surface of nickel of the porous frame structure and the small diameter ceria particles are separately attached between the large diameter ceria particles. A plurality of layers includes at least the innermost layer, which has the nickel content of 0.1 to 20 vol% and is in contact with the solid electrolyte, and the outermost layer, which has the nickel content of 40 to 99 vol% and is separated from the solid electrolyte at least by the innermost layer. Thereby, it is possible to increase a power output.
(h) The intermediate layer including a single layer or two or more layers is formed between the innermost and the outermost layers having the different nickel contents disclosed in (e). The nickel content of the innermost layer is 0.1 to 20 vol%, and the nickel content of the outermost layer is 40 to 99 vol%. The intermediate layer including the single layer or two or more layers is formed between the innermost and the outermost layers so that the nickel content is continuously or intermittently increased in the direction from the innermost layer to the outermost layer. Thereby, it is possible to increase a power output.

Therefore, the invention is characterized by:
(10) A power generation cell for a solid electrolyte fuel cell includes a solid electrolyte which is formed of a lanthanum gallate-based oxide ion conductor, a porous cathode which is formed on a side of the solid electrolyte, and a porous anode which is formed on another side of the solid electrolyte. The anode includes a sintered body of B-doped ceria expressed by a formula of Ce₁₋ₘBₘO₂ (B is one or more of Sm, Gd, Y, and Ca, and 0<m≤0.4) and nickel, the sintered body includes B-doped ceria particles, which have an average particle size of 0.2 to 0.6 µm (large diameter ceria particle) and which are separately attached to a frame surface of nickel having a porous frame structure, and B-doped ceria particles, which have an average particle size of 0.01 to 0.09 µm (small diameter ceria particle) and which are separately attached between the large diameter ceria particles, the sintered body also has a nickel composition gradient so that the nickel content is increased in a thickness direction, the nickel content of an innermost surface of the sintered body which is in contact with the solid electrolyte is 0.1 to 20 vol%, and the nickel content of an outermost surface of the sintered body which is farthest from the solid electrolyte is 40 to 99 vol%.
(11) A power generation cell for a solid electrolyte fuel cell includes a solid electrolyte which is formed of a lanthanum gallate-based oxide ion conductor, a porous cathode which is formed on a side of the solid electrolyte, and a porous anode which is formed on another side of the solid electrolyte. The anode includes a sintered body of B-doped ceria expressed by a formula of Ce₁₋ₘBₘO₂ (B is one or more of Sm, Gd, Y, and Ca, and 0<m≤0.4) and nickel, the sintered body includes a plurality of layers which has different nickel contents and in which large diameter ceria particles are separately attached to a frame surface of nickel having a porous frame structure and small diameter ceria particles are separately attached between the large diameter ceria particles, and the layers having the different nickel contents include an innermost layer, which is in contact with the solid electrolyte and has the nickel content of 0.1 to 20 vol%, and an outermost layer, which is separated from the solid electrolyte at least by the innermost layer and has the nickel content of 40 to 99 vol%.
(12) A power generation cell for a solid electrolyte fuel cell includes a solid electrolyte which is formed of a lanthanum gallate-based oxide ion conductor, a porous cathode which is formed on a side of the solid electrolyte, and a porous anode which is formed on another side of the solid electrolyte. The anode includes a sintered body of B-doped ceria expressed by a formula of Ce₁₋ₘBₘO₂ (B is one or more of Sm, Gd, Y, and Ca, and 0<m≤0.4) and nickel, the sintered body includes a plurality of layers which has different nickel contents and in which large diameter ceria particles are separately attached to a frame surface of nickel having a porous frame structure and small diameter ceria particles are separately attached between the large diameter ceria particles, the layers having the different nickel contents include an innermost layer, which is in contact with the solid electrolyte and has the nickel content of 0.1 to 20 vol%, an outermost layer, which is layered so as to be farthest from the solid electrolyte and has the nickel content of 40 to 99 vol%, and an intermediate layer, which is formed between the innermost and the outermost layers and has a single layer or two or more layers, and the intermediate layer including the single layer or two or more layers is layered so that the nickel content is continuously or intermittently increased in the direction from the innermost layer to the outermost layer which is farthest from the solid electrolyte.

It is preferable that the innermost layer be as slim as possible, the thickness of the innermost layer is 0.5 to 5 µm, and it is preferable that the thickness of the outermost layer be 10 to 50 µm. Furthermore, it is preferable that the lanthanum gallate-based oxide ion conductor be expressed by the formula of La_{1-X}Sr_{X}Ga_{1-Y-Z}Mg_{Y}A_{Z}O₃ (A is one or more of Co, Fe, Ni, and Cu, X is 0.05 to 0.3, Y is 0 to 0.29, Z is 0.01 to 0.3, and Y+Z is 0.025 to 0.3). Accordingly, the invention is characterized by:
(13) In the power generation cell for the solid electrolyte fuel cell disclosed in (8), (9), (11), or (12), a thickness of the innermost layer is 0.5 to 5 µm, and a thickness of the outermost layer is 10 to 50 µm.
(14) In the power generation cell for the solid electrolyte fuel cell disclosed in (7), (8), (9), (10), (11), (12), or (13), the lanthanum gallate-based oxide ion conductor is expressed by the formula of La_{1-X}Sr_{X}Ga_{1-Y-Z}Mg_{Y}A_{Z}O₃ (A is one or more of Co, Fe, Ni, and Cu, X is 0.05 to 0.3, Y is 0 to 0.29, Z is 0.01 to 0.3, and Y+Z is 0.025 to 0.3).

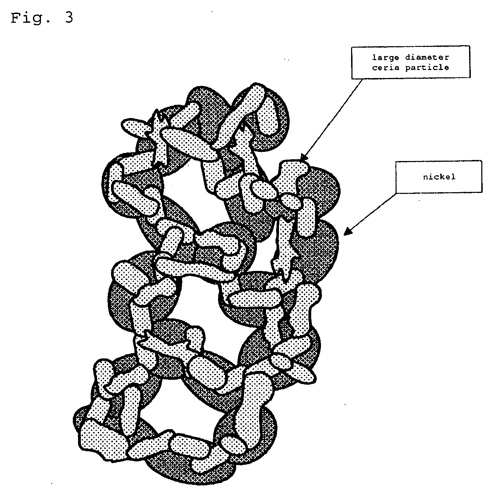

In an anode of a power generation cell for a solid electrolyte fuel cell according to an aspect of the invention, B-doped ceria particles are separately attached to a surface of nickel of a porous frame structure. It is possible to improve characteristics of the solid electrolyte fuel cell using the anode. The reason for this is as follows. That is to say, if the anode, in which the B-doped ceria particles are separately attached to the surface of nickel of the porous frame structure, is used, when the solid electrolyte fuel cell is operated, nickel is locally thermally expanded due to a high heating value, and the volume of ceria is reduced because the valence of ceria is changed from +3 to +4. However, since the B-doped ceria particles are separated from each other, there is little influence resulting from a difference in expansion, and B-doped ceria is not separated from nickel.
Furthermore, if the B-doped ceria particles are separately attached to the surface of nickel, growth of the nickel particles is suppressed, thus an increase of an exposure area of nickel metal resulting from the growth of the nickel particles is obstructed. Accordingly, reduction of the distribution density of the B-doped ceria particles, which are attached to the surface of nickel of the porous frame structure, is suppressed, thereby it is possible to prevent characteristics of the solid electrolyte fuel cell from deteriorating, caused by the reduction of reaction area of hydrogen used as fuel.
In this connection, in an anode of a conventional solid electrolyte fuel cell shown in Fig. 3, since ceria particles forms a network to be connected to each other, a surface of nickel of a porous frame structure is coated with ceria, and an exposure area of the surface of nickel is reduced to decrease conductivity. Additionally, the anode is vulnerable to the influence by a difference in expansion and has an internal strain caused by tensile stress of ceria forming the network. Further, ceria is separated from nickel, thus it is impossible to obtain desirable characteristics of the solid electrolyte fuel cell.

Fig. 1 illustrates a more preferable structure of an anode of a power generation cell for a solid electrolyte fuel cell according to an aspect of the invention, which is disclosed in (2), and (4) to (6). As shown in Fig. 1, in the anode of the power generation cell for the solid electrolyte fuel cell according to the aspect of the invention, large diameter ceria particles including B-doped ceria are separately attached to the surface of nickel of the porous frame structure, and B-doped small diameter ceria particles are separately attached between the large diameter ceria particles which are separately attached. When the power generation cell including the anode having the above-mentioned structure is used, it is possible to improve characteristics of the solid electrolyte fuel cell.
The reason for this is as follows. That is to say, if the B-doped large diameter ceria particles shown in Fig. 1 are separately attached to the surface of nickel of the porous frame structure, and if the B-doped small diameter ceria particles are separately attached between the B-doped large diameter ceria particles, B-doped ceria particles are densely attached to the surface of nickel of the porous frame structure, thus the reaction area to hydrogen used as fuel is increased. Additionally, when the solid electrolyte fuel cell is operated, nickel of the anode is locally thermally expanded due to a high heating value, and the volume of ceria is reduced because the valence of ceria is changed from +3 to +4. However, since the B-doped ceria particles do not form a network in the microstructure shown in Fig. 1, there is little influence caused by a difference in expansion, thus B-doped ceria is not separated from nickel.
Furthermore, in the microstructure shown in Fig. 1, since the B-doped small diameter ceria particles are separately attached to the surface of nickel between the large diameter ceria particles, exposure of the surface of nickel of the porous frame structure is assured, thus conductivity is not reduced. Accordingly, characteristics of the power generation cell are improved.

Additionally, the reason why the nickel content of the innermost surface or the innermost layer is 0.1 to 20 vol% in the anode formed in the power generation cell for the solid electrolyte fuel cell according to the aspect of the invention is as follows. If the nickel content of the innermost surface or the innermost layer is less than 0.1 vol%, it is impossible to obtain desirable strength because the amount of nickel constituting the frame is very small. Additionally, in case the nickel content of the innermost surface or the innermost layer is more than 20 vol%, nickel is present in the very large amount, thus this case is undesirable because characteristics of the anode are significantly reduced. Furthermore, the reason why the nickel content of the outermost surface or the outermost layer farthest from the solid electrolyte is 40 to 99 vol% is as follows. In case the nickel content is less than 40 vol%, it is impossible to obtain desirable strength required in the anode. In case the nickel content is more than 99 vol%, desirable strength is obtained, but this case is undesirable because characteristics of the anode are significantly reduced.
Furthermore, in the anode formed in the power generation cell for the solid electrolyte fuel cell according to the aspect of the invention, which is disclosed in (8), (9), (11), and (12), the thickness of the innermost layer is limited to 0.5 to 5 µm. The reason for this is as follows. The slimmer the innermost layer is, the more desirable the anode is. However, in order to form the innermost layer at low cost, the thickness must be 0.5 µm or more. If the thickness is required to be smaller, cost becomes very high. In the case of the innermost layer having the thickness larger than 5 µm, since the layer is very thick, characteristics of the anode are reduced, thus this case is undesirable.
Additionally, the reason why the thickness of the outermost layer, which is farthest from the solid electrolyte, is limited to 10 to 50 µm is as follows. In case the thickness is less than 10 µm, a surface area of Ni is small and it is impossible to obtain a sufficient effective electrode reaction area, thus this case is undesirable. Additionally, in case the thickness of the outermost layer is more than 50 µm, stress occurs in the cell due to expansion of Ni, and diffusion resistance of fuel gas is increased in the electrode, thus this case is undesirable.
The invention has the following characters.
The power generation cell for the solid electrolyte fuel cell according to the aspect of the invention includes the lanthanum gallate-based oxide ion conductor used as the solid electrolyte. The lanthanum gallate-based oxide ion conductor is expressed by the formula of La_{1-X}Sr_{X}Ga_{1-Y-Z}Mg_{Y}A_{Z}O₃ (A is one or more of Co, Fe, Ni, and Cu, X is 0.05 to 0.3, Y is 0 to 0.29, Z is 0.01 to 0.3, and Y+Z is 0.025 to 0.3). Furthermore, the power generation cell includes the anode having B-doped ceria expressed by the formula of Ce₁₋ₘBₘO₂ (B is one or more of Sm, Gd, Y, and Ca, and 0<m≤0.4), and nickel. The B-doped ceria particles are separately attached to the surface of nickel of the porous frame structure forming the network. B-doped ceria is compatible with the lanthanum gallate-based solid electrolyte. If B-doped ceria scorches and sticks to the lanthanum gallate-based solid electrolyte at 1350ºC or less, the resulting structure desirably acts as the anode, thus it is possible to produce the power generation cell for the solid electrolyte fuel cell having high characteristics.

In the power generation cell for the solid electrolyte fuel cell according to the aspect of the invention, the anode is characterized in that the B-doped ceria particles are separately attached to the surface of nickel of the porous frame structure as described above. It is more preferable that the B-doped ceria particles, which are separately attached to the surface of nickel of the porous frame structure, include the large and the small diameter ceria particles, and that the fine small diameter ceria particles are attached to the surface of nickel between the large diameter ceria particles. The average particle size of the large diameter ceria particles is preferably set to 0.2 to 0.6 µm, and may be within a range (0.1 to 2µm) of the average particle size of the known B-doped ceria. It is more preferable that the average particle size of the small diameter ceria particles be significantly fine 0.01 to 0.09 µm.
The reason why the average particle size of the small diameter ceria particles is set to 0.01 to 0.09 µm is as follows. It is difficult to form small diameter ceria particles which has the average particle size of less than 0.01 µm and are separated from each other. Additionally, if the average particle size is more than 0.09 µm, it is difficult to separately attach the small diameter ceria particles between the large diameter ceria particles. Meanwhile, the average particle sizes of the large diameter ceria particles and the small diameter ceria particles may be obtained by the image analysis.

### Effect of the Invention

A solid oxide fuel cell having a power generation cell, in which an anode of the aspect of the invention is provided, is capable of being operated at low temperatures, and it is possible to realize compactness and high efficiency of a generating module of the fuel cell.

### Best Mode for Carrying Out the Invention

### [Example 1]

First, a method of preparing a crude material used to produce a power generation cell will be described.
(a) Production of lanthanum gallate-based electrolyte crude powder:
   Reagent-level pulverulent bodies of lanthanum oxide, strontium carbonate, gallium oxide, magnesium oxide, and cobalt oxide were prepared, weighed so as to form a composition expressed by (La_{0.8}Sr_{0.2}) (Ga_{0.8}Mg_{0.15}CO_{0.05})O₃, mixed using a ball mill, and heated at 1350ºC for 3 hours in the air to form lumps of sintered bodies. The sintered body was coarsely pulverized using a hammer mill, and finely pulverized using the ball mill to produce lanthanum gallate-based electrolyte crude powder having the average particle size of 1.3 µm.

(b) Production of an ethanol solution containing ultrafine samarium-doped ceria (hereinafter, referred to as SDC) powder:
1 mol/L sodium hydroxide aqueous solution was dropped on a mixed aqueous solution of 8 parts of 0.5 mol/L cerium nitrate aqueous solution and 2 parts of 0.5 mol/L samarium nitrate aqueous solution while the mixed aqueous solution was agitated to coprecipitate cerium oxide and samarium oxide. Next, the produced powder was precipitated using a centrifugal separator, a supernatant liquid was discarded, distilled water was added, agitation and rinsing were conducted, re-precipitation was conducted using the centrifugal separator, and this procedure was repeated six times to carry out rinsing. Next, precipitation was conducted using the centrifugal separator, ethanol was added, agitation was conducted, re-precipitation was conducted using the centrifugal separator, and this procedure was repeated three times to substitute water of the solution by ethanol and thus produce an ethanol solution containing ultrafine SDC powder. A portion of the resulting ethanol solution containing the ultrafine SDC powder was drawn, and the average particle size of the ultrafine powder of ceria was 0.04 µm, as a result of measurement using a laser diffraction method.

### (b-1) Production of doped large diameter ceria powder:

1 mol/L sodium hydroxide aqueous solution was dropped on a mixed aqueous solution of 8 parts of 0.5 mol/L cerium nitrate aqueous solution and 2 parts of 0.5 mol/L samarium nitrate aqueous solution while the mixed aqueous solution was agitated to coprecipitate cerium oxide and samarium oxide. After filtration, agitation, rinsing, and filtration were repeatedly carried out six times using pure water to achieve washing so as to produce coprecipitate powder of cerium oxide and samarium oxide. The coprecipitate powder was heated at 1000ºC for 3 hours in the air to produce doped ceria powder 1 having a composition of (Ce_{0.8}Sm_{0.2})O₂ and the average particle size of about 0.8 µm.

### (c) Production of nickel oxide powder:

1 mol/L sodium hydroxide aqueous solution was dropped on 1 mol/L nickel nitrate aqueous solution while the solution was agitated to precipitate nickel hydroxide. After nickel hydroxide was filtered, agitation, rinsing, and filtration were repeatedly carried out six times using pure water to achieve washing, and the resulting substance was heated at 900ºC for 3 hours in the air to produce nickel oxide powder having the average particle size of 1.1 µm.

(d) Production of samarium strontium cobaltite-based cathode crude powder:
Reagent-level pulverulent bodies of samarium oxide, strontium carbonate, and cobalt oxide were prepared, weighed so as to form a composition expressed by (Sm_{0.5}Sr_{0.5})CoO₃, mixed using a ball mill, and heated at 1000ºC for 3 hours in the air. The resulting pulverulent bodies were finely pulverized using the ball mill to produce samarium strontium cobaltite-based cathode crude powder having the average particle size of 1.1 µm.

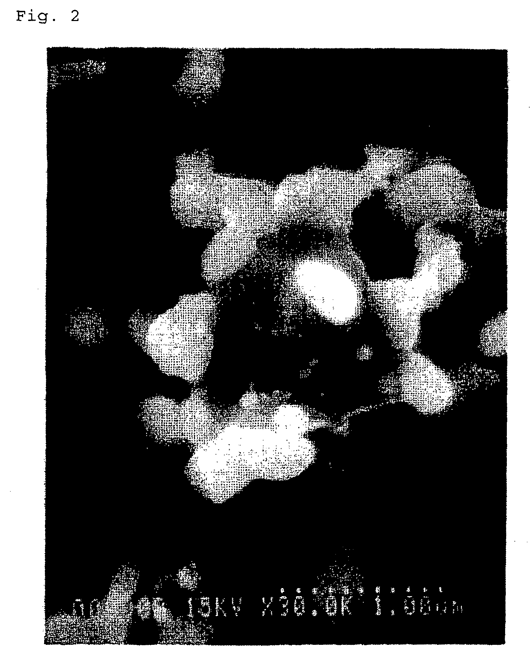

Next, the power generation cell was produced through the following procedure using the produced crude substance. First, the lanthanum gallate-based electrolyte crude powder produced in (a) was mixed with the organic binder solution, in which polyvinyl butyral and N-dioctyl phthalate were dissolved in the toluene-ethanol solvent, to form slurry. The slurry was shaped into a thin plate using a doctor blade method, cut in a circular form, and heated at 1450ºC for 4 hours in the air to conduct sintering, thereby producing a disk-shaped lanthanum gallate-based electrolyte having the thickness of 200 µm and the diameter of 120 mm. The nickel oxide powder produced in (c) was mixed with the ethanol solution containing the ultrafine SDC powder produced in (b) so that the volume ratio of nickel oxide to SDC was 60:40, and the resulting mixture was mixed with the organic binder solution, in which polyvinyl butyral and N-dioctyl phthalate were dissolved in the toluene-ethanol solvent, to form slurry. A slurry film was formed on the disk-shaped lanthanum gallate-based electrolyte through a screen printing method using the slurry so that the thickness was 30 µm, dried, and heated at 1250ºC for 3 hours in the air. Thereby, the anode was shaped, scorched and stuck to the disk-shaped lanthanum gallate-based electrolyte.
Meanwhile, the powder produced using the wet (coprecipitation) process was the dispersed ultrafine powder (nanoparticles). However, when the powder was dried, the particles were rapidly agglomerated. Accordingly, in order to mix the fine powder with nickel oxide to form the slurry without the agglomeration, the ethanol solution containing the ultrafine SDC powder was used. After the shaping, SDC was agglomerated on the surface of the nickel oxide powder during the drying to realize a separated ceria state. The resulting ceria was sintered to obtain the anode of an aspect of the invention. A portion of the microstructure of the above-mentioned anode according to the aspect of the invention was observed using a scanning electron microscope, and the picture of the structure taken using the scanning electron microscope was shown in Fig. 2. The particle sizes of the large diameter ceria particles and the small diameter ceria particles, which were separately attached to the surface of nickel of the porous frame structure shown in the picture, were measured using the image analysis method. In result, it was confirmed that the samarium-doped small diameter ceria particles having the average particle size of 0.05 µm were separately attached between the samarium-doped large diameter ceria particles having the average particle size of 0.4 µm.

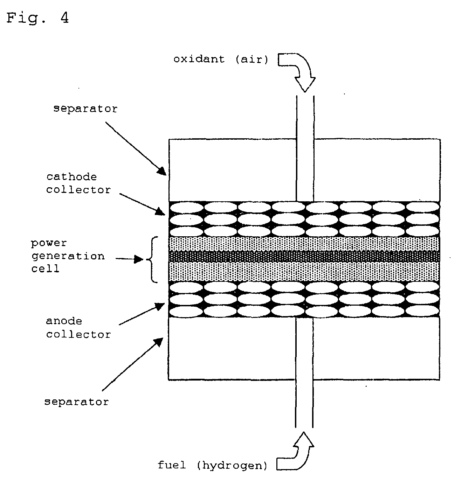

Furthermore, the samarium strontium cobaltite-based cathode crude powder produced in (d) was mixed with the organic binder solution, in which polyvinyl butyral and N-dioctyl phthalate were dissolved in the toluene-ethanol solvent, to form slurry. The slurry was shaped on a side of the lanthanum gallate-based electrolyte having another side, to which the anode scorched and stuck, using the screen printing method so that the thickness was 30 µm, dried, and heated at 1100ºC for 5 hours in the air, thus the cathode was formed, scorched and stuck to the electrolyte.
Thereby, the power generation cell for the solid electrolyte fuel cell according to the aspect of the invention (hereinafter, referred to as "the power generation cell of the aspect of the invention"), which included the solid electrolyte, the anode, and the cathode, was produced. An anode collector, which had the thickness of 1 mm and included porous Ni, was layered on the anode of the power generation cell of the aspect of the invention. Furthermore, a cathode collector, which had the thickness of 1.2 mm and included porous Ag, was layered on the cathode of the power generation cell of the aspect of the invention. Separators were layered on the anode collector and the cathode collector to produce the solid electrolyte fuel cell of the aspect of the invention shown in Fig. 4.

### [Conventional example]

For comparison, the conventional solid electrolyte fuel cell was produced through the following procedure. First, 1N-nickel nitrate aqueous solution, 1N-cerium nitrate aqueous solution, and 1N-samarium nitrate aqueous solution were prepared, weighed so that the volume ratio of NiO to (Ce_{0.8}Sm_{0.2})O₂ was 60:40, and mixed with each other. The resulting solution was converted into a vapor using a vaporizer, and air was fed into a tube-type furnace as a carrier gas. Heating was conducted at 1000ºC to produce composite oxide powder in which the volume ratio of NiO to (Ce_{0.8}Sm_{0.2})O₂ was 60:40. The composite oxide powder was used to produce slurry, and the slurry was applied on a side of the lanthanum gallate-based solid electrolyte produced in example 1 and sintered to form the anode. Furthermore, the cathode was formed using the same procedure as in example 1 to produce the power generation cell. As shown in Fig. 3, the anode formed in the power generation cell had a network structure in which samarium-doped ceria (SDC) surrounded the surface of nickel of the porous frame structure. The anode collector was layered on a side of the power generation cell, and the separator was layered on the anode collector. Additionally, the cathode collector was layered on another side of the conventional power generation cell, and the separator was layered on the cathode collector to produce the conventional solid electrolyte fuel cell shown in Fig. 4.

The power generation test was conducted using the solid electrolyte fuel cell of the aspect of the invention and the conventional solid electrolyte fuel cell under the following conditions, and the results are described in Table 1.

### <Power generation test>

Temperature: 750ºC
Fuel gas: hydrogen
Flow rate of fuel gas: 1.02 L/min (=9 cc/nin/cm²)
Oxidant gas: air
Flow rate of oxidant gas: 5.1 L/min (=45 cc/nin/cm²)

Electric power was generated under the above-mentioned power generation conditions, and load current density, fuel utilization, cell voltage, output, output density, and generating efficiency were measured. The results are described in Table 1.

**[Table 1]**

| Type | Load current density (A/cm²) | Fuel utilization (%) | Cell voltage (V) | Output (W) | Output density (W/cm²) | Generating efficiency LHV (%) |
|---|---|---|---|---|---|---|
| Solid electrolyte fuel cell of the aspect of the invention | 1.015 | 80 | 0.695 | 68.3 | 0.604 | 37.9 |
| Conventional solid electrolyte fuel cell | 0.90 | 70 | 0.533 | 54.2 | 0.480 | 30.1 |

From the results of Table 1, it is confirmed that, even though the solid electrolyte fuel cell of the aspect of the invention and the conventional solid electrolyte fuel cell have the same structure with the exception of the anode, the solid electrolyte fuel cell of the aspect of the invention have the excellent load current density, fuel utilization, cell voltage, output, output density, and generating efficiency in comparison with the conventional solid electrolyte fuel cell.

### [Example 2]

### <Production of the power generation cell>

### Production of lanthanum gallate-based solid electrolyte crude powder:

Reagent-level pulverulent bodies of lanthanum oxide, strontium carbonate, gallium oxide, magnesium oxide, and cobalt oxide were prepared, weighed so as to form a composition expressed by (La_{0.8}Sr_{0.2}) (Ga_{0.8}Mg_{0.15}Co_{0.05})O₃, mixed using a ball mill, and heated at 1350ºC for 3 hours in the air to form lumps of sintered bodies. The sintered body was coarsely pulverized using a hammer mill, and finely pulverized using the ball mill to produce lanthanum gallate-based solid electrolyte crude powder having the average particle size of 1.3 µm.

### Production of an ethanol solution containing ultrafine samarium-doped ceria powder:

Next, 1 mol/L sodium hydroxide aqueous solution was dropped on a mixed aqueous solution of 8 parts of 0.5 mol/L cerium nitrate aqueous solution and 2 parts of 0.5 mol/L samarium nitrate aqueous solution while the mixed aqueous solution was agitated to coprecipitate cerium oxide and samarium oxide. Next, the produced powder was precipitated using a centrifugal separator, a supernatant liquid was discarded, distilled water was added, agitation and rinsing were conducted, re-precipitation was conducted using the centrifugal separator, and this procedure was repeated six times to carry out rinsing. Next, precipitation was conducted using the centrifugal separator, ethanol was added, agitation was conducted, re-precipitation was conducted using the centrifugal separator, and this procedure was repeated three times to substitute water of the solution by ethanol and thus produce an ethanol solution containing ultrafine samarium-doped ceria (hereinafter, referred to as "SDC") powder. A portion of the resulting ethanol solution containing the ultrafine SDC powder was drawn, and the average particle size of the ultrafine powder of ceria was 0.04 µm, as a result of measurement using a laser diffraction method.

### Production of samarium-doped ceria powder:

1 mol/L sodium hydroxide aqueous solution was dropped on a mixed aqueous solution of 8 parts of 0.5 mol/L cerium nitrate aqueous solution and 2 parts of 0.5 mol/L samarium nitrate aqueous solution while the mixed aqueous solution was agitated to coprecipitate cerium oxide and samarium oxide. After filtration, agitation, rinsing, and filtration were repeatedly carried out six times using pure water to achieve washing so as to produce coprecipitate powder of cerium oxide and samarium oxide. The coprecipitate powder was heated at 1000ºC for 3 hours in the air to produce SDC powder having a composition of (Ce_{0.8}Sm_{0.2})O₂ and the average particle size of about 0.8 µm.

### Production of nickel oxide powder:

1 mol/L sodium hydroxide aqueous solution was dropped on 1 mol/L nickel nitrate aqueous solution while the solution was agitated to precipitate nickel hydroxide. After nickel hydroxide was filtered, agitation, rinsing, and filtration were repeatedly carried out six times using pure water to achieve washing, and the resulting substance was heated at 900ºC for 3 hours in the air to produce nickel oxide powder having the average particle size of 1.1 µm.

Production of samarium strontium cobaltite-based cathode crude powder:
Reagent-level pulverulent bodies of samarium oxide, strontium carbonate, and cobalt oxide were prepared, weighed so as to form a composition expressed by (Sm_{0.5}Sr_{0.5})CoO₃, mixed using a ball mill, and heated at 1000ºC for 3 hours in the air. The resulting pulverulent bodies were finely pulverized using the ball mill to produce samarium strontium cobaltite-based cathode crude powder having the average particle size of 1.1 µm.

### Production of lanthanum gallate-based solid electrolyte:

The lanthanum gallate-based solid electrolyte crude powder was mixed with the organic binder solution, in which polyvinyl butyral and N-dioctyl phthalate were dissolved in the toluene-ethanol solvent, to form slurry. The slurry was shaped into a thin plate using a doctor blade method, cut in a circular form, and heated at 1450ºC for 4 hours in the air to conduct sintering, thereby producing a disk-shaped lanthanum gallate-based solid electrolyte having the thickness of 200µm and the diameter of 120 mm.

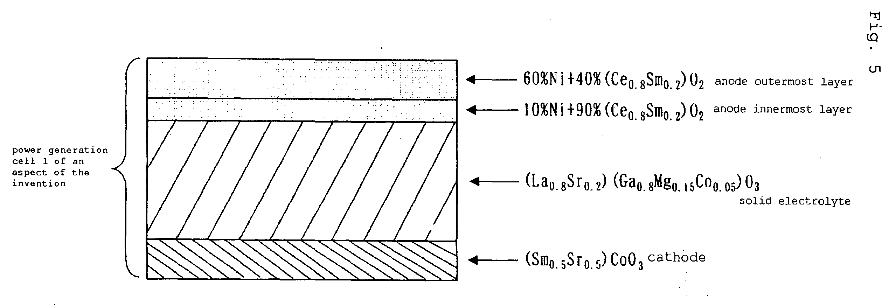

Shaping, scorching and sticking of the anode:
The nickel oxide powder was mixed with the SDC powder in the volume ratio of 10:90, and the resulting mixture was mixed with the organic binder solution, in which polyvinyl butyral and N-dioctyl phthalate were dissolved in the toluene-ethanol solvent, to form slurry. The slurry was applied on a side of the lanthanum gallate-based solid electrolyte using the screen printing method so that the average thickness was 1 µm, and dried to form a first green layer.
Furthermore, the nickel oxide powder was mixed with the ethanol solution containing the ultrafine SDC powder so that the volume ratio of nickel oxide to SDC was 60:40, and the resulting mixture was mixed with the organic binder solution, in which polyvinyl butyral and N-dioctyl phthalate were dissolved in the toluene-ethanol solvent, to form slurry. A slurry layer was formed on the dried first green layer through the screen printing method using the slurry so that the thickness was 30 µm, and dried to form a second green layer.
Next, the lanthanum gallate-based solid electrolyte, which includes a plurality of green layers having the first and the second green layers on a side thereof, was heated at 1250ºC for 3 hours in the air so as to cause the anode including the anode innermost layer and the anode outermost layer shown in Fig. 5 to scorch and stick to the side of the lanthanum gallate-based solid electrolyte.
Meanwhile, the powder produced using the coprecipitation process was the dispersed ultrafine powder (nanoparticles). However, when the powder was dried, the particles were rapidly agglomerated. Accordingly, in order to mix the fine powder with nickel oxide to form the slurry without the agglomeration, the ethanol solution containing the ultrafine SDC powder was used. After the shaping, SDC was agglomerated on the surface of the nickel oxide powder during the drying to realize a separated ceria state. The resulting ceria was sintered to obtain the anode of another aspect of the invention. A portion of the microstructure of the above-mentioned anode according to the aspect of the invention was observed using a scanning electron microscope, and the picture of the structure taken using the scanning electron microscope was shown in Fig. 2. The particle sizes of the large diameter ceria particles and the small diameter ceria particles, which were separately attached to the surface of nickel of the porous frame structure shown in the picture, were measured using the image analysis method. In result, it was confirmed that the samarium-doped small diameter ceria particles having the average particle size of 0.05µm were separately attached between the samarium-doped large diameter ceria particles having the average particle size of 0.4 µm.

### Shaping, scorching and sticking of the cathode:

The samarium strontium cobaltite-based cathode crude powder was mixed with the organic binder solution, in which polyvinyl butyral and N-dioctyl phthalate were dissolved in the toluene-ethanol solvent, to form slurry. The slurry was shaped on a side of the lanthanum gallate-based solid electrolyte using the screen printing method so that the thickness was 30 µm, dried, and heated at 1100ºC for 5 hours in the air, thus the cathode shown in Fig. 5 was shaped, scorched and stuck to the electrolyte.

Thereby, the power generation cell 1 for the solid electrolyte fuel cell according to the aspect of the invention (hereinafter, referred to as "the power generation cell of the aspect of the invention"), which included the solid electrolyte, the anode, and the cathode, was produced as shown in Fig. 5. An anode collector, which had the thickness of 1 mm and included porous Ni, was layered on the anode of the power generation cell 1 of the aspect of the invention. Furthermore, a cathode collector, which had the thickness of 1.2 mm and included porous Ag, was layered on the cathode of the power generation cell of the aspect of the invention. Separators were layered on the anode collector and the cathode collector to produce the solid electrolyte fuel cell 1 of the aspect of the invention shown in Fig. 4.

For comparison, the conventional solid electrolyte fuel cell was produced through the following procedure. First, 1N-nickel nitrate aqueous solution, 1N-cerium nitrate aqueous solution, and 1N-samarium nitrate aqueous solution were prepared, weighed so that the volume ratio of NiO to (Ce_{0.8}Sm_{0.2})O₂ was 60:40, and mixed with each other. The resulting solution was converted into a vapor using a vaporizer, and air was fed into a tube-type furnace as a carrier gas. Heating was conducted at 1000ºC to produce composite oxide powder in which the volume ratio of NiO to (Ce_{0.8}Sm_{0.2})O₂ was 60:40. The composite oxide powder was used to produce slurry, and the slurry was applied on a side of the lanthanum gallate-based solid electrolyte produced in the example and sintered to form the anode. Furthermore, the cathode was formed to produce the power generation cell. As shown in Fig. 3, the anode formed in the power generation cell had a network structure in which SDC surrounded the surface of nickel of the porous frame structure. The anode collector was layered on a side of the power generation cell, and the separator was layered on the anode collector. Additionally, the cathode collector was layered on another side of the conventional power generation cell, and the separator was layered on the cathode collector to produce the conventional solid electrolyte fuel cell shown in Fig. 4.

The power generation test was conducted using the solid electrolyte fuel cell 1 of the aspect of the invention and the conventional solid electrolyte fuel cell under the following conditions.

### <Power generation test>

Temperature: 750ºC
Fuel gas: hydrogen
Flow rate of fuel gas: 1.02 L/min (=9 cc/nin/cm²)
Oxidant gas: air
Flow rate of oxidant gas: 5.1 L/min (=45 cc/nin/cm²)
Electric power was generated under the above-mentioned power generation conditions, and load current density, fuel utilization, cell voltage, output, output density, and generating efficiency were measured. The results are described in Table 1.

**[Table 2]**

| Type | Open circuit voltage (V) | Fuel utilization (%) | Cell voltage (V) | Output (W) | Output density (W/cm²) | Generating efficiency LHV (%) |
|---|---|---|---|---|---|---|
| Solid electrolyte fuel cell 1 of the aspect of the invention | 1.015 | 80 | 0.624 | 73.1 | 0.646 | 40.0 |
| Conventional solid electrolyte fuel cell | 0.90 | 70 | 0.472 | 54.3 | 0.480 | 30.2 |

From the results of Table 2, it is confirmed that, even though the solid electrolyte fuel cell 1 of the aspect of the invention and the conventional solid electrolyte fuel cell have the same structure with the exception of the anode, the solid electrolyte fuel cell 1 of the aspect of the invention have the excellent load current density, fuel utilization, cell voltage, output, output density, and generating efficiency in comparison with the conventional solid electrolyte fuel cell.

### [Example 3]

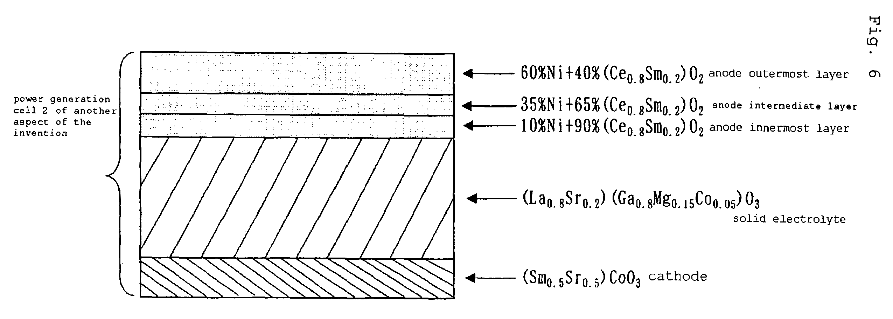

The nickel oxide powder prepared in example 2 was mixed with the SDC powder in the volume ratio of 10:90, and the resulting mixture was mixed with the organic binder solution, in which polyvinyl butyral and N-dioctyl phthalate were dissolved in the toluene-ethanol solvent, to form slurry. The slurry was applied on a side of the lanthanum gallate-based solid electrolyte using the screen printing method so that the average thickness was 1 µm, and dried to form a first green layer.
Furthermore, the nickel oxide powder was mixed with the ethanol solution containing the ultrafine SDC powder so that the volume ratio of nickel oxide to SDC was 35:65, and the resulting mixture was mixed with the organic binder solution, in which polyvinyl butyral and N-dioctyl phthalate were dissolved in the toluene-ethanol solvent, to form slurry. A slurry layer was formed on the dried first green layer through the screen printing method using the slurry so that the thickness was 1 µm, and dried to form an intermediate green layer.
Furthermore, the nickel oxide powder was mixed with the ethanol solution containing the ultrafine SDC powder so that the volume ratio of nickel oxide to SDC was 60:40, and the resulting mixture was mixed with the organic binder solution, in which polyvinyl butyral and N-dioctyl phthalate were dissolved in the toluene-ethanol solvent, to form slurry. A slurry layer was formed on the dried intermediate green layer through the screen printing method using the slurry so that the thickness was 20 µm, and dried to form a second green layer.
Next, the lanthanum gallate-based solid electrolyte, which includes a plurality of green layers having the first green layer, the intermediate green layer, and the second green layers on a side thereof, was heated at 1250ºC for 3 hours in the air so as to cause the anode including the anode innermost layer, the anode intermediate layer, and the anode outermost layer shown in Fig. 6 to scorch and stick to the side of the lanthanum gallate-based solid electrolyte.
It was confirmed that the anode, which was formed through the scorching and the sticking, had a structure where the samarium-doped small diameter ceria particles having the average particle size of 0.05 µm were separately attached between the samarium-doped large diameter ceria particles having the average particle size of 0.4 µm.

The procedure of example 2 was repeated to cause the solid electrolyte and the cathode to scorch and stick, except that the anode scorched and stuck as described above, thereby producing a power generation cell 2 including the solid electrolyte, the anode, and the cathode according to still another aspect of the invention. An anode collector, which had the thickness of 1 mm and included porous Ni, was layered on the anode of the power generation cell 2 of the aspect of the invention. Furthermore, a cathode collector, which had the thickness of 1.2 mm and included porous Ag, was layered on the cathode of the power generation cell 2 of the aspect of the invention. Separators were layered on the anode collector and the cathode collector to produce a solid electrolyte fuel cell 2 of the aspect of the invention.

The power generation test was conducted using the solid electrolyte fuel cell 2 of the aspect of the invention under the following conditions.

### <Power generation test>

Temperature: 750ºC
Fuel gas: hydrogen
Flow rate of fuel gas: 1.02 L/min (=9 cc/nin/cm²)
Oxidant gas: air
Flow rate of oxidant gas: 5.1 L/min (=45 cc/nin/cm²)
Electric power was generated under the above-mentioned power generation conditions, and load current density, fuel utilization, cell voltage, output, output density, and generating efficiency were measured. The results are described in Table 2.

**[Table 3]**

| Type | Open circuit voltage (V) | Fuel utilization (%) | Cell voltage (V) | Output (W) | Output density (W/cm²) | Generating efficiency LHV (%) |
|---|---|---|---|---|---|---|
| Solid electrolyte fuel cell 2 of the aspect of the invention | 1.010 | 80 | 0.620 | 76.2 | 0.645 | 40 |

It is confirmed that, even though the solid electrolyte fuel cell 2 of the aspect of the invention of Table 3 and the conventional solid electrolyte fuel cell of Table 2 have the same structure with the exception of the anode, the solid electrolyte fuel cell 2 of the aspect of the invention have the excellent load current density, fuel utilization, cell voltage, output, output density, and generating efficiency in comparison with the conventional solid electrolyte fuel cell.

In example 3, the intermediate layer, which is formed in the anode of the power generation cell 2 of the aspect of the invention, includes a single layer. However, the intermediate layer may include two or more layers and the layers may layered so that the nickel content is continuously or intermittently increased in the direction from the innermost layer to the outermost layer, thereby producing the anode. Furthermore, the intermediate layer may include more layers to form the anode having a nickel composition gradient where the nickel content is increased in the direction from the innermost surface to the outermost surface in a thickness direction as disclosed in (1).

### Brief Description of the Drawings

Fig. 1 illustrates a structure of an anode of an aspect of the invention.
Fig. 2 is a scanning electron microscope picture of the structure of the anode of the aspect of the invention.
Fig. 3 illustrates a structure of a conventional anode.
Fig. 4 illustrates a solid electrolyte fuel cell.
Fig. 5 illustrates a power generation cell of a solid electrolyte fuel cell according to another aspect of the invention.
Fig. 6 illustrates a power generation cell of a solid electrolyte fuel cell according to still another aspect of the invention.

## Claims

1. An anode of a power generation cell for a solid oxide fuel cell,
wherein B-doped ceria particles (B is one or more of Sm, Gd, Y, and Ca) are separately attached to a frame surface of porous nickel having a network frame structure.

2. An anode of a power generation cell for a solid oxide fuel cell,
wherein B-doped ceria particles (B is one or more of Sm, Gd, Y, and Ca) having an average particle size of 0.2 to 0.6 µm (large diameter ceria particles) are separately attached to a frame surface of porous nickel having a network frame structure, and B-doped ceria particles having an average particle size of 0.01 to 0.09 µm (small diameter ceria particles) are separately attached between the large diameter ceria particles.

3. An anode of a power generation cell for a solid oxide fuel cell,
wherein the B-doped ceria particles of claim 1 or the B-doped ceria particles including the large diameter ceria particles and the small diameter ceria particles of claim 2 are expressed by a formula of Ce₁₋ₘBₘO₂ (B is one or more of Sm, Gd, Y, and Ca, and 0<m≤0.4).

4. A power generation cell for a solid oxide fuel cell, comprising:
an electrolyte which is formed of a lanthanum gallate-based oxide ion conductor;
a porous cathode which is formed on a side of the electrolyte; and
a porous anode which is formed on another side of the electrolyte,
wherein the anode is the anode according to any one of claims 1, 2, and 3.

5. The power generation cell for the solid oxide fuel cell according to claim 4,
wherein the lanthanum gallate-based oxide ion conductor is expressed by a formula of La_{1-X}Sr_{X}Ga_{1-Y-Z}Mg_{Y}A_{Z}O₃ (A is one or more of Co, Fe, Ni, and Cu, X is 0.05 to 0.3, Y is 0 to 0.29, Z is 0.01 to 0.3, and Y+Z is 0.025 to 0.3).

6. A solid oxide fuel cell comprising the power generation cell for the solid oxide fuel cell according to claim 4 or 5.

7. A power generation cell for a solid electrolyte fuel cell, comprising:
a solid electrolyte which is formed of a lanthanum gallate-based oxide ion conductor;
a porous cathode which is formed on a side of the solid electrolyte; and
a porous anode which is formed on another side of the solid electrolyte,
wherein the anode includes a sintered body of B-doped ceria expressed by a formula of Ce₁₋ₘBₘO₂ (B is one or more of Sm, Gd, Y, and Ca, and 0<m≤0.4) and nickel, B-doped ceria particles are separately attached to a frame surface of nickel having a porous frame structure in the sintered body, the sintered body has a nickel composition gradient so that a nickel content is increased in a thickness direction, the nickel content of an innermost surface of the sintered body which is in contact with the solid electrolyte is 0.1 to 20 vol%, and the nickel content of an outermost surface of the sintered body which is farthest from the solid electrolyte is 40 to 99 vol%.

8. A power generation cell for a solid electrolyte fuel cell, comprising:
a solid electrolyte which is formed of a lanthanum gallate-based oxide ion conductor;
a porous cathode which is formed on a side of the solid electrolyte; and
a porous anode which is formed on another side of the solid electrolyte,
wherein the anode includes a sintered body of B-doped ceria expressed by a formula of Ce₁₋ₘBₘO₂ (B is one or more of Sm, Gd, Y, and Ca, and 0<m≤0.4) and nickel, the sintered body includes a plurality of layers which has different nickel contents and in which B-doped ceria particles are separately attached to a frame surface of nickel having a porous frame structure, and the layers having the different nickel contents include an innermost layer, which is in contact with the solid electrolyte and has the nickel content of 0.1 to 20 vol%, and an outermost layer, which is separated from the solid electrolyte at least by the innermost layer and has the nickel content of 40 to 99 vol%.

9. A power generation cell for a solid electrolyte fuel cell, comprising:
a solid electrolyte which is formed of a lanthanum gallate-based oxide ion conductor;
a porous cathode which is formed on a side of the solid electrolyte; and
a porous anode which is formed on another side of the solid electrolyte,
wherein the anode includes a sintered body of B-doped ceria expressed by a formula of Ce₁₋ₘBₘO₂ (B is one or more of Sm, Gd, Y, and Ca, and 0<m≤0.4) and nickel, the sintered body includes a plurality of layers which has different nickel contents and in which B-doped ceria particles are separately attached to a frame surface of nickel having a porous frame structure, the layers having the different nickel contents include an innermost layer, which is in contact with the solid electrolyte and has the nickel content of 0.1 to 20 vol%, an outermost layer, which is layered so as to be farthest from the solid electrolyte and has the nickel content of 40 to 99 vol%, and an intermediate layer, which is formed between the innermost and the outermost layers and has a single layer or two or more layers, and the intermediate layer including the single layer or two or more layers is layered so that the nickel content is continuously or intermittently increased in the direction from the innermost layer to the outermost layer which is farthest from the solid electrolyte.

10. A power generation cell for a solid electrolyte fuel cell, comprising:
a solid electrolyte which is formed of a lanthanum gallate-based oxide ion conductor;
a porous cathode which is formed on a side of the solid electrolyte; and
a porous anode which is formed on another side of the solid electrolyte,
wherein the anode includes a sintered body of B-doped ceria expressed by a formula of Ce₁₋ₘBₘO₂ (B is one or more of Sm, Gd, Y, and Ca, and 0<m≤0.4) and nickel, the sintered body includes B-doped ceria particles, which have an average particle size of 0.2 to 0.6 µm (large diameter ceria particle) and which are separately attached to a frame surface of nickel having a porous frame structure, and B-doped ceria particles, which have an average particle size of 0.01 to 0.09 µm (small diameter ceria particle) and which are separately attached between the large diameter ceria particles, the sintered body also has a nickel composition gradient so that the nickel content is increased in a thickness direction, the nickel content of an innermost surface of the sintered body which is in contact with the solid electrolyte is 0.1 to 20 vol%, and the nickel content of an outermost surface of the sintered body which is farthest from the solid electrolyte is 40 to 99 vol%.

11. A power generation cell for a solid electrolyte fuel cell, comprising:
a solid electrolyte which is formed of a lanthanum gallate-based oxide ion conductor;
a porous cathode which is formed on a side of the solid electrolyte; and
a porous anode which is formed on another side of the solid electrolyte,
wherein the anode includes a sintered body of B-doped ceria expressed by a formula of Ce₁₋ₘBₘO₂ (B is one or more of Sm, Gd, Y, and Ca, and 0<m≤0.4) and nickel, the sintered body includes a plurality of layers which has different nickel contents and in which large diameter ceria particles are separately attached to a frame surface of nickel having a porous frame structure and small diameter ceria particles are separately attached between the large diameter ceria particles, and the layers having the different nickel contents include an innermost layer, which is in contact with the solid electrolyte and has the nickel content of 0.1 to 20 vol%, and an outermost layer, which is separated from the solid electrolyte at least by the innermost layer and has the nickel content of 40 to 99 vol%.

12. A power generation cell for a solid electrolyte fuel cell, comprising:
a solid electrolyte which is formed of a lanthanum gallate-based oxide ion conductor;
a porous cathode which is formed on a side of the solid electrolyte; and
a porous anode which is formed on another side of the solid electrolyte,
wherein the anode includes a sintered body of B-doped ceria expressed by a formula of Ce₁₋ₘBₘO₂ (B is one or more of Sm, Gd, Y, and Ca, and 0<m≤0.4) and nickel, the sintered body includes a plurality of layers which has different nickel contents and in which large diameter ceria particles are separately attached to a frame surface of nickel having a porous frame structure and small diameter ceria particles are separately attached between the large diameter ceria particles, the layers having the different nickel contents include an innermost layer, which is in contact with the solid electrolyte and has the nickel content of 0.1 to 20 vol%, an outermost layer, which is layered so as to be farthest from the solid electrolyte and has the nickel content of 40 to 99 vol%, and an intermediate layer, which is formed between the innermost and the outermost layers and has a single layer or two or more layers, and the intermediate layer including the single layer or two or more layers is layered so that the nickel content is continuously or intermittently increased in the direction from the innermost layer to the outermost layer which is farthest from the solid electrolyte.

13. The power generation cell for the solid electrolyte fuel cell according to any one of claims 8, 9, 11, and 12,
wherein a thickness of the innermost layer is 0.5 to 5 µm, and a thickness of the outermost layer is 10 to 50 µm.

14. The power generation cell for the solid electrolyte fuel cell according to any one of claims 7, 8, 9, 10, 11, 12, and 13,
wherein the lanthanum gallate-based oxide ion conductor is expressed by a formula of La_{1-X}Sr_{X}Ga_{1-Y-Z}Mg_{Y}A_{Z}O₃ (A is one or more of Co, Fe, Ni, and Cu, X is 0.05 to 0.3, Y is 0 to 0.29, Z is 0.01 to 0.3, and Y+Z is 0.025 to 0.3).

15. A solid electrolyte fuel cell comprising the power generation cell for the solid electrolyte fuel cell according to any one of claims 7, 8, 9, 10, 11, 12, 13, and 14.
